Europäisches Patentamt

European Patent Office

Office européen des brevets

(11) Publication number: **0 269 296**
**B1**

## EUROPEAN PATENT SPECIFICATION

(45) Date of publication of patent specification: **06.02.91**

(21) Application number: **87309815.6**

(22) Date of filing: **05.11.87**

(51) Int. Cl.⁵: **H 04 M 1/274,** H 04 Q 1/448

(54) Dial tone detector.

(30) Priority: **26.11.86 CA 523905**

(43) Date of publication of application:
**01.06.88 Bulletin 88/22**

(45) Publication of the grant of the patent:
**06.02.91 Bulletin 91/06**

(84) Designated Contracting States:
**DE FR GB NL SE**

(56) References cited:
**EP-A-0 016 692**
**GB-A-2 011 689**
**GB-A-2 030 821**
**US-A-4 047 114**
**US-A-4 390 843**

**IBM TECHNICAL DISCLOSURE BULLETIN, vol. 6,
no. 12, May 1964, pages 30-31, New York, US;
S.J. MYERS: "Single frequency detector"
IBM TECHNICAL DISCLOSURE BULLETIN, vol.
27, no. 11, April 1985, pages 6519-6520, New
York, US; "Voice detection and discrimination"**

(73) Proprietor: **NORTHERN TELECOM LIMITED
600 de la Gauchetiere Street West
Montreal Quebec H3B 4N7 (CA)**

(72) Inventor: **Brown, Anthony Kevin Dale
26 Equestrian Drive
Kanata Ontario K2M 1C1 (CA)**

(74) Representative: **Crawford, Andrew Birkby et al
A.A. THORNTON & CO. Northumberland House
303-306 High Holborn
London WC1V 7LE (GB)**

## Description

The invention is in the field of telephony signal detectors and more particularly relates to a dial tone detector useful for detection of dial tones of various known standards.

The development of electronic telephone station sets has heralded the introduction of many telephony features heretofore not readily available to the general public. Some examples of these features are repetory dialing, last number redial and saved number redial. Each of these features requires that dial tone be present on the telephone line before the feature is invoked. Otherwise a premature transmission of dialing digits to an associated telephone central office exchange will result in an incompletely dialed number and failure to achieve connection to a desired party. Many such features include a time delay before dialing such that in typical operation adequate time is provided between the OFF HOOK condition and the commencement of dialing. However, as is observed by Henry P. Sousa in United States Patent No. 3,959,600 issued with the title "Remotely Programmable Call Diverter" on May 25, 1976, "Prior art devices have also failed to function well in a variety of telephone environments because of simple timing problems. As an example, the time it takes a telephone central exchange to furnish a dial tone to a subscriber varies widely from exchange to exchange, partially as a function of the equipment in the exchange and partially as a function of the volume of calls being handled at the time. Some prior art devices have initiated dialing solely as a function of time, and lost calls because of the failure to wait for a dial tone".

Of course the obvious solution is to provide the featured telephone station set with a dial tone detector such that receipt of dial tone is assured before dialing is commenced. The requirements of such a dial tone detector are that of detecting dial tone of a minimal continuous duration of about 1/4 second or more, and the detected dial tone must be distinguished from other intermittent tones within a dial tone passband. The dial tone passband must be broad enough to include at least the following types of dial tone if the feature telephone set is to be useable without restriction by various operating telephone companies. For example, in North America, at least three dial tone signal standards are in use. These are:

1) Precise dial tone used on more recent switches and private branch exchanges. This is 350 hertz and 440 hertz combined;

2) 600 hertz modulated by 120 hertz or 133 hertz. This is used on step-by-step switches, and so is an application for pulse dialing; and

3) 400 hertz single frequency, which is used by some common carriers.

In a dial tone detector using a typical analog filter, a passband covering a range of at least 350 hertz to 733 hertz is required to detect and respond to any and all of these dial tone signals.

Such an analog filter has disadvantages in that it can pass energy generated by DTMF signalling and requires bulky reactive components for its construction. A further example of a known dial tone detector is provided by US—A—4 047 114.

It is an object of the invention to provide dial tone detection with very sharply defined passband limits such that any of these dial tones can be detected without erroneously detecting DTMF signalling.

It is also an object of the invention to detect any of these dial tone occurrences within a fraction of a second, such that no undue or irksome delay of function is attributable to the telephone station set.

The present invention provides a dial tone detector for discriminating a dial tone in an analog signal, comprising:

A limiter for generating a square wave signal when the analog signal is of at least a predetermined amplitude;

a timing circuit for generating a READ signal followed by a RESET signal, at a predetermined rate;

a first counter for counting the square wave signal between occurrences of the REST signal;

a first bistable circuit connected to be set to a first state in response to a count in the first counter equaling a first number and to be set to a second state in response to the RESET signal;

a second bistable circuit connected to be set to a first state in response to an occurrence of the RESET signal and to be set to a second state in response to a count in the first counter being a second number greater than the first number;

logic means for indicating a first state in response to the first and second bistable circuits being in the first state at the same time and otherwise for indicating a second state;

a third bistable circuit;

a gating circuit being connected between an output of the logic means and an input of the third bistable circuit for causing the third bistable circuit to store an instant state of the logic means in response to and coincident with each occurrence of the READ signal;

a second counter for counting a timing signal, having a repetition rate of at least twice the repetition rate of the READ and RESET signals, in response to a state corresponding to the first state of said logic means being stored by the third bistable circuit; and

a decoder being responsive to a count in the second counter being equal to at least one predetermined number for asserting a signal for indicating the presence of the dial tone in the analog signal.

The present invention also provides a method for detecting a dial tone in an analog signal being received at a telephone station set comprising the steps of:

a) generating periodic interleaved READ and RESET signal pulses and generating timing signal pulses of at least twice a pulse repetition rate of the READ signal pulses;

b) generating square wave signal pulses in response to the analog signal being of at least a predetermined amplitude;

c) counting occurrences of the square signal pulses between occurrences of the RESET signal pulses;

d) storing a first state indicating a valid count in response to the counting of step c) resulting in a count being within a predetermined range at a moment of an occurrence of the READ signal; and

e) counting the timing signal pulses only while the valid count indication is continously stored, a presence of the dial tone in the analog signal is indicated by a count value of at least a predetermined number.

An example embodiment is discussed with reference to accompanying drawings in which:

Figure 1 is a block schematic diagram of a telephone station set including an automatic dial feature wherein a dial tone detector is useful; and

Figure 2 is a block schematic diagram of a dial tone detector in accordance with the invention.

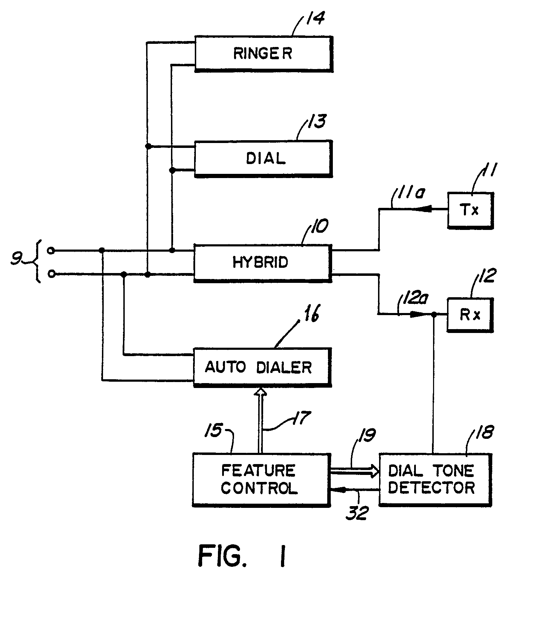

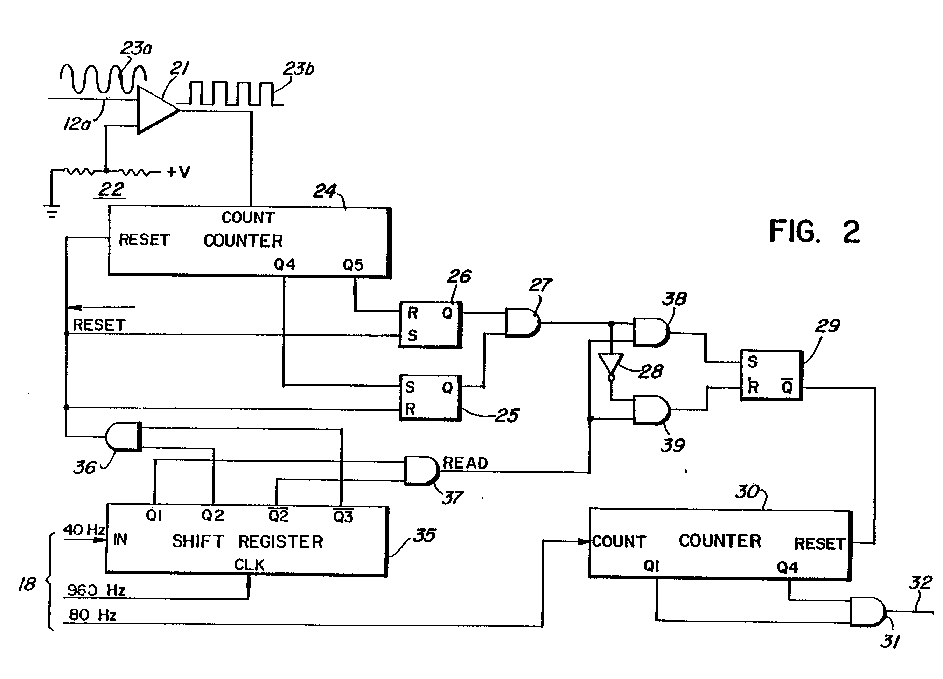

The telephone station set in Figure 1 is but one general exemplary form which is well known to persons skilled in the telephony arts. However, operation of the illustrated telephone set is briefly reviewed for the convenience of the reader. The telephone station set is connected to a central office exchange, private branch exchange or the like (not shown) by a loop circuit or telephone line (not shown) via terminals 9. A hybrid circuit 10 passes voice band analog signals from the terminals 9 to a receiver 12 via a signal path 12a, and passes voice band analog signals from a transmitter 11, connected via a signal path 11a, to the terminals 9. When the telephone station set is in an ON HOOK condition, ringing signals, appearing at the terminals 9, generate an audible sound via a ringer 14 to signify an incoming telephone call. To initiate an outgoing telephone call, the telephone station set is in the OFF HOOK condition. A dial tone, audibly received via the receiver 12, indicates that the associated exchange is ready to receive dialing information which may be provided through 1 dial 13 or by an automatic dialer 16. The automatic dialer 16 is controlled by a feature controller 15 connected thereto via a bus 17. The feature controller 15 enables the automatic dialer 16 to dial a preselected telephone number, when so requested, in response to the telephone set being placed in the OFF HOOK condition and an initial indication on a lead 32, that dial tone is detected by a dial tone detector 18. In this particular example, it was convenient that the feature controller provide various timing signals for operation of the dial tone detector 18, via a bus 19. The dial tone detector is illustrated in more detail in Figure 2.

Referring to Figure 2, signals 23a received from the signal path 12a, are connected to a comparator which consists of an amplifier 21 and threshold circuit 22. When the signals 23a are in excess of a given minimum amplitude, the comparator amplifies and limits the signals to form a 'square' waveform as illustrated at 23b.

A digital binary counter 24 utilizes the 'square' waveform as a clock to increment itself. Two outputs of the counter 24 (Q4 and Q5) operate SET/RESET flipflops 25 and 26 to record when the counter 24 has passed counts of 8 and 16. Other values of the counter 24 could be used. The actual values determine a passband of the dial tone detector. Since the counts are relatively low, a five bit counter is sufficient. A valid input signal is one which causes the counter 24 to exceed a count of seven but to be of less than a count of sixteen after counting for a sample period of 23.96 milliseconds. Timing waveforms are generated by a shift register 35 and two timing signals having frequencies of 40 hertz and of 960 hertz. These timing signal frequencies were chosen since they were readily available in the particular telephone station set for which this the dial tone detector is intended. The circuit is such that two signals are generated, a READ signal and a RESET signal at an output of an AND gate 37 and an AND gate 36, respectively. These signals occur every 25 milliseconds. The READ signal occurs just before the RESET signal and both of them occupy together within a period of one cycle of the 960 hertz timing signal. By means of these signals the counter 24 and the SET/RESET flipflops 25 and 26 are reset and set respectively every 25 milliseconds. The states of the flipflops 24 and 25 are ANDed by an AND gate 27. The ANDed state is supplied to an AND gate 38 and via an inverter 28 to an AND gate 39. The AND gates 38 and 39 pass the ANDed state to a SET/RESET flipflop 29, with each occurrence of the READ signal, that is just prior to the RESET signal. If the signal 23a is of sufficient amplitude and is in the passband of interest this results in a count of between eight and fifteen. This is a valid count state which is stored in the flipflop 29. Thus the flipflop 29 contains a continuous monitor of the signal 23a, which is updated every 25 milliseconds. While the output of the flipflop 29 indicates a valid state, a second four bit counter 30 is incremented by an 80 hertz timing signal. Outputs Q1 and Q4 of the counter 30 are decoded by an AND gate 31. If the second counter 30 reaches a count of nine, this occurrence is asserted by an output of the AND gate 31 on a lead 32 to indicate that the frequency of the input signal 23a remained within the passband of interest for at least 250 milliseconds and hence that therefore the input signal is a valid dial tone.

Although the first counter 24 limits the minimum acceptable count to eight, an incoming signal having a period of one seventh of the sampling interval could just create a count of eight if the phase of the signal in relation to the sampling interval permits it. Such a signal however, will not be accepted as a valid dial tone since during the 250 millisecond time interval of the second counter 30 the phase of the incoming signal will change and the signal will fail to relatively produce a count of eight in the first counter 24.

As discussed in the foregoing, the dial tone detector operates by detection of a presence of energy in a precisely defined passband. The roll off at the edge of the passband is desirable and extremely steep as is demonstrated in the following discussion.

The 25 millisecond sampling rate consists of a 23.96 millisecond sampling interval and a 1.04 millisecond period of generating the READ and RESET signals. A continuously valid input signal must produce a minimum count of eight in 23.96 millisecond, and thus have a minimum frequency of 333.9 hertz. Over a 250 millisecond validation period, the signal must process through 83.47 cycles.

The lowest frequency signal which might appear as valid over the validation period would be such that phase shift would cause it to be invalid on the sampling interval following the 250 millisecond minus the 1.04 millisecond used for the READ and RESET signals, or 248.96 milliseconds. Thus for this lowest frequency, the phase in relation to the 25 millisecond sampling period would shift by almost 23.96 millisecond in 248.96 millisecond or 2.306 milliseconds in 23.96 milliseconds. In relation to a single cycle of the 333.9 hertz signal calculated above this represents a frequency shift of:

$$333.9 \times 2.306/8 \times 23.96 = 4.016 \text{ hertz}$$

Thus the lowest frequency that might appear as valid dial tone signal, given an appropriate phase relationship to the sampling period is $333.9 - 4.02$ hertz, or 329.9 hertz. Thus the low frequency cutoff of the filter is extremely steep, progressing to complete cutoff in approximately 4 hertz.

By a similar process of reasoning, the higher frequency which might appear as valid over the validation period is considered. If the maximum count of the input signal during a 23.96 sampling interval is fifteen, the high frequency cutoff is 626 hertz. Frequencies slightly above 626 hertz might be passed as valid, if their phase in relation to the sampling interval is appropriate. The maximum frequency shift above 626 hertz which might be passed in this way is:

$$626 \times 2.306/15 \times 23.96 = 4.016 \text{ hertz}$$

Thus the high frequency cutoff of the filter is extremely steep, progressing to complete cutoff in approximately 4 hertz.

The circuit in Figure 2, meets the requirements of a dial tone detector circuit having very strong discrimination against tone frequencies outside the passband of interest. The circuit in Figure 2 also represents a very economical realization of a dial tone detector in terms of transistor gate count and silicon area utilized if implemented in an integrated circuit form.

## Claims

1. A dial tone detector for discriminating a dial tone in an analog signal, comprising:

a limiter (21, 22) for generating a square wave signal when the analog signal is of at least a predetermined amplitude;

a timing circuit (35) for generating a READ signal followed by a RESET signal, at a predetermined rate;

a first counter (24) for counting the square wave signal between occurrences of the REST signal;

a first bistable circuit (25) connected to be set to a first state in response to a count in the first counter equaling a first number and to be set to a second state in response to the RESET signal;

a second bistable circuit (26) connected to be set to a first state in response to an occurrence of the RESET signal and to be set to a second state in response to a count in the first counter being a second number greater than the first number;

logic means (27) for indicating a first state in response to the first and second bistable circuits being in the first state at the same time and otherwise for indicating a second state;

a third bistable circuit (29);

a gating circuit (38, 28, 39) being connected between an output of the logic means and an input of the third bistable circuit for causing the third bistable circuit to store an instant state of the logic means in response to and coincident with each occurrence of the READ signal;

a second counter (30) for counting a timing signal, having a repetition rate of at least twice the repetition rate of the READ and RESET signals, in response to a state corresponding to the first state of said logic means being stored by the third bistable circuit; and

a decoder (31) being responsive to a count in the second counter being equal to at least one predetermined number for asserting a signal for indicating the presence of the dial tone in the analog signal.

2. A method for detecting a dial tone in an analog signal being received at a telephone station set comprising the steps of:

a) generating periodic interleaved READ and RESET signal pulses and generating timing signal pulses of at least twice a pulse repetition rate of the READ signal pulses;

b) generating square wave signal pulses in response to the analog signal being of at least a predetermined amplitude;

c) counting occurrences of the square signal pulses betweeen occurrences of the RESET signal pulses;

d) storing a first state indicating a valid count in response to the counting of step c) resulting in a count being within a predetermined range at a moment of an occurrence of the READ signal; and

e) counting the timing signal pulses only while the valid count indication is continuously stored, whereby a presence of the dial tone in the analog signal is indicated by a count value of at least a predetermined number.

3. A method as defined in claim 2 wherein the RESET and READ signals are generated at a predetermined rate, each READ signal occurrence being immediately followed by a RESET signal occurrence.

4. A method as defined in claim 3 wherein the timing signal is generated to have a pulse repetition frequency of at least twice as pulsed repetition frequency of the READ and RESET signals.

5. In a telephone station set including an automatic dialler, the use of a dial tone detector and a feature controller, for generating first timing signals for operation of the dial tone detector, and being responsive to an indication from the dial tone detector, for generating second timing signals for dialing operation of the automatic dialler, the dial tone detector comprising:

a limiter (21, 22) for generating a square wave signal when the analog signal is of at least a predetermined amplitude;

a timing circuit (35) for generating a READ signal followed by a RESET signal, at a predetermined rate, in response to at least one of the first timing signals from the feature controller;

a first counter (24) for counting the square wave signal between occurrences of the RESET signal;

a first bistable circuit (25) connected to be set to a first state in response to a count in the first counter equaling a first number and to be set to a second state in response to the RESET signal;

a second bistable circuit (26) connected to be set to a first state in response to an occurrence of the RESET signal and to be set to a second state in response to a count in the first counter being a second number greater than the first number;

logic means (27) for indicating a first state in response to the first and second bistable circuits being in the first state at the same time and otherwise for indicating a second state;

a third bistable circuit (29);

a gating circuit (38, 28, 39) being connected between an output of the logic means and an input of the third bistable circuit for causing the third bistable circuit to store an instant state of the logic means in response to and coincident with each occurrence of the READ signal;

a second counter (30), having a count input being connected to the feature controller for receiving another of said first timing signals wherein said another timing signal is of a repetition rate of at least twice the repetition rate of the READ signal, the second counter being responsive to a state, corresponding to the first state of said logic means being stored by the third bistable circuit, for counting said another timing signal; and

a decoder (31) being responsive to a count in the second counter being equal to at least one predetermined number for asserting said indication from the dial tone detector.

**Patentansprüche**

1. Wählzeichen-Detektor zum Diskriminieren eines Wählzeichens in einem Analogsignal, mit

einem Begrenzer (21, 22) zur Erzeugung eines Recteckwellensignals, wenn das Analogsignal zumindest eine vorbestimmte Amplitude aufweist,

einem Zeitgeberschaltkreis (35) zur Erzeugung eines LESE-Signals gefolgt von einem RÜCKSETZ-Signal mit einer vorgegebenen Geschwindigkeit,

einem ersten Zähler (24) zum Zählen der Rechteckwellensignale zwischen den Auftritten des RÜCKSETZ-Signals,

einem ersten bistabilen Schaltkreis (25), der in Abhängigkeit davon in einen ersten Zustand versetzbar ist, ob ein Zählwert in dem ersten Zähler gleich einer ersten Zahl ist und der in Abhängigkeit vom RÜCKSETZ-Signal in einen zweiten Zustand versetzbar ist,

einem zweiten bistabilen Schaltkreis (26), der in Abhängigkeit von einem Auftreten des RÜCKSETZ-Signals in einen ersten Zustand versetzbar ist und in Abhängigkeit davon in einen zweiten Zustand versetzbar ist, ob ein Zählwert in dem ersten Zähler gleich einer zweiten Zahl ist, die größer als die erste Zahl ist,

einer Logikeinrichtung (27) zur Angabe eines ersten Zustands in Abhängigkeit davon, ob der erste und der zweite bistabile Schaltkreis zur gleichen Zeit den ersten Zustand annehmen und anderenfalls zur Angabe eines zweiten Zustands,

einem dritten bistabilen Schaltkreis (29),

einem Torschaltkreis (38, 28, 39), der zwischen einen Ausgang der Logikeinrichtung und einen Eingang des dritten bistabilen Schaltkreises geschaltet ist, um den dritten bistabilen Schaltkreis zum Speichern eines momentanen Zustands der Logikeinrichtung in Abhängigkeit von und zusammenfallend mit jedem Auftreten des LESE-Signals zu veranlassen,

einem zweiten Zähler (30) zum Zählen eines Zeitgebersignals mit einer Wiederholungsrate von zumindest dem zweifachen der Wiederholungsrate der LESE- und RÜCKSETZ-Signale in Abhängigkeit von einem Zustand, der dem ersten Zustand der Logikeinrichtung entspricht, der vom dritten bistabilen Schaltkreis gespeichert wird, und

einem Decodierer (31), der auf einen Zählwert in dem zweiten Zähler anspricht, der gleich zumindest einer vorbestimmten Zahl ist, um ein Signal zur Angabe der Anwesenheit des Wählzeichens in dem Analogsignal für gültig zu erklären.

2. Verfahren zur Erfassung eines Wählzeichens in einem Analogsignal, das bei einem Telefonapparat empfangen wird, mit folgenden Schritten:

a) Erzeugung periodischer, verschachtelter LESE- und RÜCKSETZ-Signalimpulse und Erzeugung von Zeitsignalimpulsen mit einer Pulswiederholungsrate, die zumindest zweimal so groß wie die der LESE-Signalimpulse ist,

b) Erzeugung von Rechteckwellen-Signalimpulsen in Abhängigkeit davon, ob das Analogsignal zumindest einer vorbestimmten Amplitude entspricht,

c) Zählen der Auftritte der Rechtecksignalimpulse zwischen den Auftritten der RÜCKSETZ-Signalimpulse,

d) Speichern eines ersten Zustandes, der einen gültigen Zählwert angibt, in Abhängigkeit von der Zählung gemäß Schritt c), was zu einem Zählwert führt, der zu einem Zeitpunkt eines Auftretens des LESE-Signals innerhalb eines vorbestimmten Bereiches liegt, und

e) Zählen der Zeitsignalimpulse nur während der Zeit, während der die Angabe des gültigen Zählwerts kontinuierlich gespeichert ist, wodurch eine Anwesenheit des Wählzeichens in dem Analogzeichen durch einen Zählwert angezeigt wird, der zumindest einer vorgegebenen Zahl entspricht.

3. Verfahren nach Anspruch 2, bei dem die RÜCKSETZ- und LESE-Signale mit einer vorbestimmten Geschwindigkeit erzeugt werden, wobei jedem Auftreten eines LESE-Signals unmittelbar das Auftreten eines RÜCKSETZ-Signals folgt.

4. Verfahren nach Anspruch 3, bei dem das Zeitsignal mit einer Impulswiederholungsfrequenz erzeugt wird, die zumindest doppelt so groß wie die Pulswiederholungsfrequenz der LESE- und RÜCKSETZ-Signale ist.

5. Telefonapparat mit einer automatischen Wähleinrichtung, wobei ein Wählzeichen-Detektor und eine Merkmalssteuerung vorgesehen sind, um erste Zeitsignale für den Betrieb des Wählzeichen-Detektors zu erzeugen und die auf eine Anzeige vom Wählzeichen-Detektor anspricht, um zweite Zeitsignale für den Wählbetrieb der automatischen Wähleinrichtung zu erzeugen, wobei der Wählzeichen-Detektor die folgenden Elemente umfaßt:

einen Begrenzer (21, 22) zur Erzeugung eines Rechteckwellensignals, wenn das Analogsignal zumindest eine vorgegebene Amplitude aufweist,

einen Zeitgeberschaltkreis (35) zur Erzeugung eines LESE-Signals gefolgt von einem RÜCK-SETZ-Signal mit einer vorbestimmten Geschwindigkeit in Abhängigkeit von zumindest einem der ersten Zeitsignale von der Merkmalssteuerung,

einen ersten Zähler (24) zum Zählen der Rechteckwellensignale zwischen den Auftritten des RÜCKSETZ-Signals,

einen ersten bistabilen Schaltkreis (25), der in Abhängigkeit davon in einen ersten Zustand versetzbar ist, ob ein Zählwert in dem ersten Zähler einer ersten Zahl gleicht, und in Abhängigkeit von RÜCKSETZ-Signal in einen zweiten Zustand versetzbar ist,

einen zweiten bistabilen Schaltkreis (26), der in Abhängigkeit von einem Auftreten des RÜCKSETZ-Signals in einen ersten Zustand versetzbar ist und in Abhängigkeit davon in einen zweiten Zustand versetzbar ist, ob ein Zählwert in dem ersten Zähler einer zweiten Zahl entspricht, die größer als die erste Zahl ist,

eine Logikeinrichtung (27) zur Angabe eines ersten Zustands in Abhängigkeit davon, ob der erste und der zweite bistabile Schaltkreis gleichzeitig den ersten Zustand einnehmen, und anderenfalls zur Angabe eines zweiten Zustands, einen dritten bistabilen Schaltkreis (29),

einen Torschaltkreis (38, 28, 39), der zwischen einen Ausgang der Logikeinrichtung und einen Eingang des dritten bistabilen Schaltkreises geschaltet ist, um den dritten bistabilen Schaltkreis zu veranlassen, einen momentanen Zustand der Logikeinrichtung in Abhängigkeit von und zusammenfallend mit jedem Auftreten des LESE-Signals zu speichern,

einen zweiten Zähler (30) mit einem Zähleingang, der mit der Merkmalssteuerung verbunden ist, um ein anderes der ersten Zeitsignale zu empfangen, wobei das andere Zeitsignal eine Wiederholungsrate aufweist, die zumindest doppelt so groß wie die Wiederholungsrate des LESE-Signals ist, der zweite Zähler auf einen Zustand anspricht, der dem ersten Zustand der Logikeinrichtung entspricht, welcher durch den dritten bistabilen Schaltkreis gespeichert wird, um das andere Zeitsignal zu zählen, und

einen Decodierer (31), der auf einen Zählwert in dem zweiten Zähler anspricht, der gleich zumindest einer vorbestimmten Zahl ist, um die Anzeige von Wählzeichen-Detektor für gültig zu erklären.

**Revendications**

1. Détecteur de tonalité d'appel, permettant de distinguer une tonalité d'appel dans un signal analogique, comprenant:

— un limiteur (21, 22) pour fournir un signal à onde carrée lorsque le signal analogique est au moins d'une amplitude prédéterminée;

— un circuit de synchronisation (35) pour fournir un signal LECTURE suivi d'un signal REMISE A ZERO, à un rythme prédéterminé;

— un premier compteur (24) pour le comptage du signal à onde carrée entre les occurrences du signal REMISE A ZERO;

— un premier circuit bistable (25) connecté de façon à être mis dans un premier état en réponse à un comptage dans le premier compteur, correspondant à un premier nombre et dans un second état en réponse au signal REMISE A ZERO;

— un deuxième circuit bistable (26) connecté de façon à être mis dans un premier état en réponse à l'apparition du signal REMISE A ZERO et dans un second état en réponse à un comptage dans le premier compteur, correspondant à un second nombre plus élevé que le premier nombre;

— des moyens logiques (27) pour indiquer un premier état en réponse aux premier et deuxième circuits bistables en même temps dans le premier état et, sinon, pour indiquer un second état;

— un troisième circuit bistable (29);

— un circuit déclencheur (38, 28, 39), branché entre une sortie des moyens logiques et une entrée du troisième circuit bistable pour amener le troisième circuit bistable à stocker un état instantané des moyens logiques en réponse à, et coïncidant avec, chaque apparition du signal LECTURE;

— un second compteur (30) pour le comptage d'un signal d'horloge, avec une cadence de répétition représentant au moins deux fois la cadence de répétition des signaux LECTURE et REMISE A ZERO, en réponse à un état correspondant au premier état des dits moyens logiques, stocké par le troisième circuit bistable; et

— un décodeur (31), répondant à un comptage dans le second compteur, égal au moins à un nombre prédéterminé pour s'assurer d'un signal pour indiquer la présence de la tonalité d'appel dans le signal analogique.

2. Méthode pour détecteur une tonalité d'appel dans un signal analogique reçu par un poste téléphonique, comprenant les étapes suivantes:

a) génération d'impulsions périodiques imbriquées de signaux LECTURE et REMISE A ZERO et génération d'impulsions de signaux d'horloge, correspondant au moins au double de la cadence de répétition des impulsions du signal LECTURE;

b) génération d'impulsions de signaux à onde carrée en réponse au signal analogique, d'une amplitude au moins égale à une amplitude prédéterminée;

c) comptage des occurrences des impulsions de signaux à onde rectangulaire entre les apparitions des impulsions du signal REMISE A ZERO;

d) stockage d'un premier état indiquant un nombre correct en réponse au comptage de l'étape c), avec pour résultat une valeur située dans une fourchette prédéterminée à un moment d'apparition du signal LECTURE; et

e) comptage des impulsions des signaux d'horloge, uniquement tant que l'indication de comptage correct est stockée en continu, une présence de la tonalité d'appel dans le signal analogique étant indiquée par une valeur de comptage correspondant au moins à un nombre prédéterminé.

3. Méthode, comme définie dans la revendication 2, dans laquelle les signaux REMISE A ZERO et LECTURE sont produits à une cadence prédéterminée, chaque apparition du signal LECTURE étant immédiatement suivie de l'apparition d'un signal REMISE A ZERO.

4. Méthode, comme définie dans la revendication 3, dans laquelle le signal d'horloge est produit de façon à avoir une cadence de répétition d'impulsions au moins deux fois égale à la cadence de répétition des impulsions des signaux LECTURE et REMISE A ZERO.

5. Dans un poste téléphonique comprenant un composeur automatique, l'utilisation d'un détecteur de tonalité d'appel et d'un contrôleur du dispositif, pour produire les premiers signaux d'horloge pour la commande du détecteur de tonalité d'appel, et en réponse à une indication reçue du détecteur de tonalité d'appel, pour produire les seconds signaux d'horloge pour la commande du composeur automatique, le détecteur de tonalité d'appel comprenant:

— un limiteur (21, 22) pour fournir un signal à onde carrée lorsque le signal analogique est au moins d'une amplitude prédéterminée;

— un circuit de synchronisation (35) pour fournir un signal LECTURE suivi d'un signal REMISE A ZERO, à un rythme prédéterminé, en réponse à au moins un des premiers signaux d'horloge envoyés par le contrôleur du dispositif;

— un premier compteur (24) pour le comptage du signal à onde carrée entre les occurrences du signal REMISE A ZERO;

— un premier circuit bistable (25) connecté de façon à être mis dans un premier état en réponse à un comptage dans le premier compteur, correspondant à un premier nombre et dans un second état en réponse au signal REMISE A ZERO;

— un deuxième circuit bistable (26) connecté de façon à être mis dans un premier état en réponse à l'apparition du signal REMISE A ZERO et dans un second état en réponse à un comptage dans le premier compteur, correspondant à un second nombre plus élevé que le premier nombre;

— des moyens logiques (27) pour indiquer un premier état en réponse aux premier et deuxième circuits bistables en même temps dans le même état et, sinon, pour indiquer un second état;

— un troisième circuit bistable (29);

— un circuit déclencheur (38, 28, 39), branché entre une sortie des moyens logiques et une entrée du troisième circuit bistable pour amener le troisième circuit bistable à stocker un état instantané de moyens logiques en réponse à, et coïncidant avec, chaque apparition du signal LECTURE;

— un second compteur (30), avec une entrée de comptage connectée au contrôleur du dispositif pour recevoir un autre des dits premiers signaux d'horloge, dans lequel le dit autre signal d'horloge a une cadence de répétition représentant au moins deux fois la cadence de répétition du signal LECTURE, le second compteur agissant en réponse à un état, correspondant au premier état des dits moyens logiques, stocké par le troisième circuit bistable, pour le comptage du dit autre signal d'horloge; et

— un décodeur (31), répondant à un comptage dans le second compteur, au moins égal à un nombre prédéterminé pour s'assurer de la dite indication venant du détecteur de tonalité d'appel.

FIG. 1

FIG. 2